# EUROPEAN PATENT APPLICATION

(11) **EP 1 153 804 A1**
(43) Date of publication of application: **14.11.2001**
(21) Application number: 00303883.3
(22) Date of filing: 09.05.2000
(51) Int. Cl.: B60R 21/01

(54) **Electronic reversing aid with wireless transmitter and receiver**

(71) Applicant: Boddy, Terence, Hong Kong (CN)
(72) Inventor: Boddy, Terence, Hong Kong (CN)
(74) Representative: Wightman, David Alexander

(57) **Abstract**

This invention provides a reversing aid to assist in indicating the proximity between a vehicle and surrounding objects. The sensors provided on the vehicle detect the proximity of an object and pass a signal to a transmitter. The transmitter provides a wireless signal to a receiver located near the driver of the vehicle to provide an indication of the distance between the vehicle and the object By providing a wireless transmission, the reversing aid can be fitted to vehicles without the need to accommodate a signal path in the wiring loom from the rear of the vehicle to the cab of the vehicle. The transmitter is provided as a demountable apparatus so that it can be shifted to cooperate with sensors provided on a towed vehicle such as a trailer and continue to cooperate with the receiver.

## Description

### FIELD OF THE INVENTION

This invention relates to an electronic reversing aid with a wireless transmitter and receiver. Although generally described as a reversing aid, the technology may be used in alternative placements on the vehicle although still intended as an indicator of distance between a vehicle and an object.

### BACKGROUND TO THE INVENTION

The operation of motor vehicles often requires the user to exercise considerable judgment in the manoeuvring of vehicles with respect to other objects such as other vehicles or static objects. This is particularly apparent when a vehicle is in reverse negotiating a parking space, driveway or similar. While in reverse, the driver is required to exercise judgment in respect of the most distant comer of the vehicle from the driver's own position and also has an obscured view of objects that may be in the path. Although the use of side mirrors can assist, there are still significant blind spots.

It is already known for some vehicles to provide sensors to sense surrounding objects and provide the driver some form of indication of the existence of the object or, more preferably, the proximity of the object. Typically these may comprise proximity sensors placed in locations such as at the rear corners of a vehicle and communicating through the vehicle-wiring frame to some form of indicator near the driver.

One of the disadvantages of the present products is that they provide insufficient flexibility in use. Such sensors are generally permanently fitted to a particular vehicle and use the vehicles own wiring system such that it is not convenient to utilize all or portions of the system in another vehicle. Therefore, a driver with multiple vehicles needs to consider the purchase of multiple systems and mounting to each individual vehicle.

A significantly greater difficulty is incurred when a trailer, caravan or other towed item is fitted to the vehicle. The vehicles rearwardly mounted sensors can do no more than indicate the location of the towed object and the system needs to either be ignored or switched off during towing. Of course, reversing with a trailer, caravan or other towed object fitted is considerably more difficult both in terms of judgment and feasibility and a sensor and indicator arrangement would be of considerably greater use that could be fitted to the towed vehicle.

There are difficulties with the present apparatus in fitting such systems to towed vehicles. While it was possible to mount sensors on the rear of a towed vehicle, there is generally no convenient wiring system that may be utilized to connect the sensors to an indicator located by the driver. Such systems are difficult to retrofit to existing towed vehicles that have not been designed with wiring to accommodate such apparatus. Furthermore, on linking the wiring to the vehicle itself, the electrical connections between vehicles available for towed vehicles are relatively few. These are often already saturated in the provision of power and signals to indicators, brake lights, parking lights and other functions. This may cause considerable difficulty in accommodating a sensor signal through the towed vehicle.

### OBJECT OF THE INVENTION

It is an object of the present invention to overcome some of the difficulties and disadvantages with the prior art by providing an electronic reversing aid with a wireless transmitter and receiver. As a minimum, it is an object to provide the public with a useful choice.

### SUMMARY OF THE INVENTION

Accordingly, in the first aspect, the invention may broadly be said to consist in a system for detecting an object while reversing a vehicle and providing an indication to the driver of the proximity of the object comprising sensor means for detecting an object in the path of a reversing vehicle, radio frequency transmitter means for transmitting a signal representative of the distance of the object from the vehicle, and radio frequency receiver means for receiving the signal from the transmitter means and generating a visual and/or audible indication to the driver of the proximity of the object relative to the vehicle.

Accordingly, in a second aspect, the invention may broadly be said to consist in a reversing aid for fitment to a vehicle comprising:
- at least one sensor for fitment on or adjacent an exterior of the vehicle to sense the proximity of an object;
- a wireless transmitter in communication with said sensor to receive a signal representative of the proximity from said sensor and transmit a further representative signal;
- a receiver to receive said representative signal from said transmitter; and
- indicating means in communication with said receiver to provide a driver with an indication of the proximity of an object in accordance with the signal received by said receiver.

Preferably at least said wireless transmitter is demountable from a fixing to said vehicle.

Preferably said demountable fixing comprises a mounting bracket attachable to a vehicle to receive said transmitter to accommodate connection between said transmitter and at least one signal carrying communication path from said at least one sensor.

### BRIEF DESCRIPTION OF THE DRAWINGS

The invention will now be described with reference to the following drawings in which:
- Fig. 1 is a schematic diagram of items forming a preferred embodiment of the system;
- Fig. 2 is a perspective view of a vehicle and towed object demonstrating placement of the apparatus of Fig. 1; and
- Figs. 3A and 3B are side and plan elevational views of a receiver in accordance with the preferred embodiment.

### DETAILED DESCRIPTION OF PREFERRED EMBODIMENTS

This invention provides an electronic reversing aid with wireless transmitter and receiver. Although generally referred to as a reversing aid, the apparatus may be used for placements other that detecting objects behind a motor vehicle and can be used for object sensing around a vehicle.

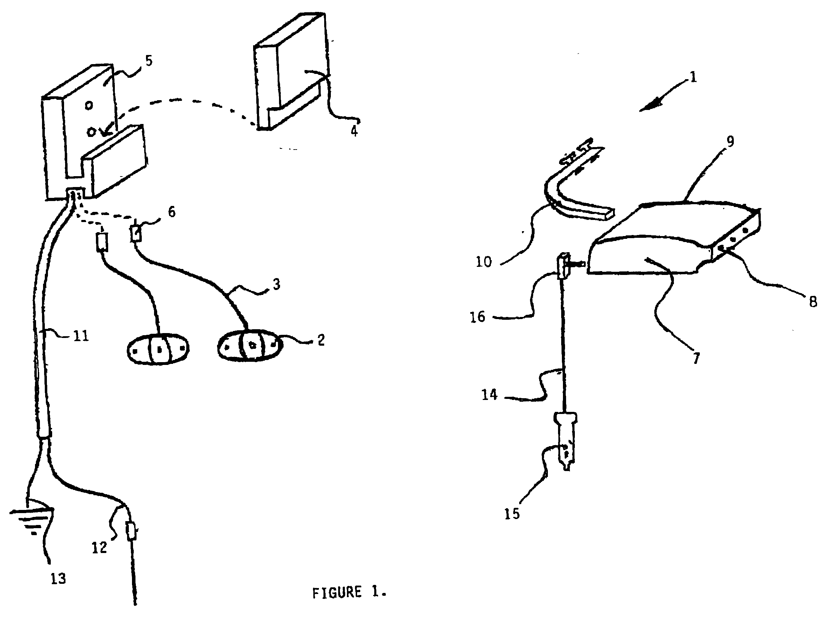

A preferred embodiment of an apparatus is shown in Fig. 1. The reversing aid 1 includes at least one sensor 2 that is locatable on a vehicle to sense the proximity of objects. Such sensors 2 can utilize a variety of methods of detection such as ultrasound or similar and are already commercially available.

The sensor 2 is connected to a communication path 3 for connection to a transmitter 4. As shown in this preferred embodiment of Fig. 1, the transmitter 4 is itself fitted into a mounting bracket 5 and it will be appreciated that the connector 6 on the communication path 3 may be fitted directly to the transmitter 4 or to a connection on the mounting bracket 5 that itself connects to the transmitter 4.

It is merely sufficient that the transmitter 4 receives a signal from the sensor 2 along the communication path 3 that is indicative of the proximity of an object to the sensor 2.

Upon receiving a signal, the transmitter 4 can then provide a wireless signal to a receiver 7. This receiver is provided with or communicates with indicating means 8 so as to alert a driver that an object is within proximity.

As shown in this preferred embodiment, the receiver 7 and the indicating means 8 may be combined in a single housing 9. This is provided for simplicity although these components can be separately provided if desired.

As it is intended that the receiver or at least the indicating means 8 must be in proximity with the driver, a suitable mounting 10 can be provided to fit onto a windscreen or similar so that the unit can be mounted at a convenient position to the driver.

The indicating means 8 can provide visual, audible or both forms of indication.

For simplicity of fitment, the mounting bracket 5 may also provide an electrical connection to a vehicle power supply such as wires 11 that can connect to both a power wire 12 and an earth 13 onto the body of the vehicle. This provides power directly to the transmitter 4 although it will be appreciated that the transmitter may be provided with its own power source such as battery or other power if desired.

Similarly, the receiver 7 may be provided with its own power source or, as shown in this preferred embodiment, connected by a power lead 14 to a suitable power source from the vehicle. This preferred embodiment uses an adapter 15 intended for fitment to a vehicle's cigarette lighter as being a suitable source of power for the receiver 7. Of course, the receiver may be wired directly to the vehicle power supply rather than through any form of adapter if a user does not wish to take the vehicle cigarette lighter out of operation. Regardless of the manner in which the power source is supplied to the receiver 7, it is preferred that it be disconnectable through a connection such as connection 16 so as to make the receiver 7 transportable to another vehicle if desired.

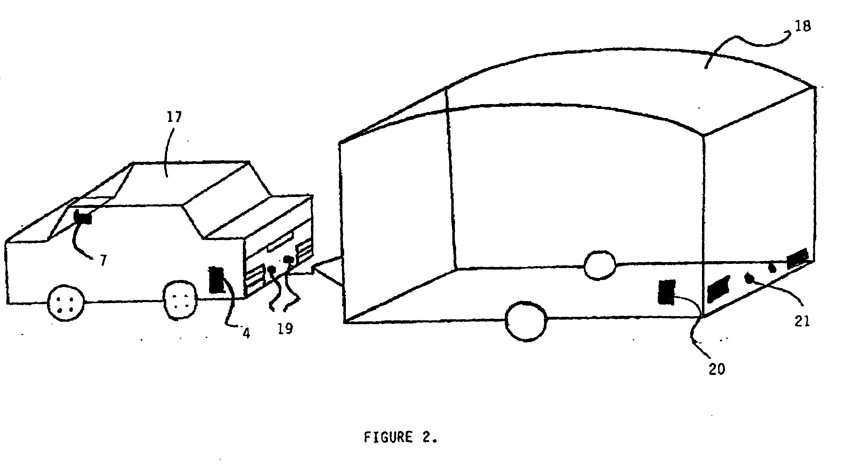

Referring to Fig. 2, the apparatus 1 is shown generally as it may be fitted to a vehicle 17 and/or a towed vehicle 18 such as a trailer or caravan or similar.

As shown in Fig. 2, the receiver 7 may reside in the cab of the vehicle near to the driver. If the item is used on the vehicle 17 alone, a sensor 2 may be provided as a pair of sensors 19 attached on or adjacent a rear panel of the vehicle 17. The transmitter 4 may be mounted within its bracket 5 in the boot of the vehicle 17.

The apparatus 1 is intended to provide easy and convenient fitment to a vehicle and also allow some portability to other vehicles.

Referring to the apparatus as shown in Fig. 1 and its placement as shown in Fig. 2, it will be appreciated that the receiver 7 can easily be provided in a portable fashion for mounting and dismounting in the cab of the vehicle. The receiver can easily be taken by a user to another vehicle with or without taking the power supply lead 14 and the mounting bracket 10. If desired, these items can be provided as additional sets for fitment to further vehicles.

The mounting 5 to provide a mounting bracket for the transmitter 4 also allows the transmitter 4 to be easily detached and fitted to a similar mounting bracket in an alternative vehicle.

The sensors 18 as shown in Fig, 2 can be permanently fitted to the vehicle 17 or, if desired, also demountable from the vehicle. However, as the sensors need to be wired to a location within the boot of the vehicle for attachment to the mounting bracket 5, a more permanent fixing may be desired. The mounting bracket 5 retains the connection to the power supply for the transmitter 4 although again, the mounting bracket 5 can be made dismountable if desired and provided with extra connectors from the power supply 11 to the mounting bracket 5 for detachment.

There is generally little difficulty in finding an available power supply that may be sourced within a boot of a vehicle. Current is supplied to a variety of apparatus in the rear of the vehicle. The preferential connection may be to connect the lead 11 to a power wire 12 that is also used to supply power to a reversing light of a vehicle if fitted. This will ensure activation of the sensors 18 only upon selection of reverse gear with the switching to accommodate this already provided for the reversing light Alternatively, the apparatus may be manually switched into effect by a user and use a more general power supply.

As described, the preferred embodiment of the apparatus can be fitted to a vehicle without any need to provide a wire from the sensors 18 that can carry a signal all the way to a placement in the cab of a vehicle 7. This facilitates fitment of the system to existing vehicles rather than the need to accommodate such a wire in the wiring loom of a vehicle upon manufacture.

Again referring to Fig. 2, the apparatus 1 as shown in Fig. 1 provides particular advantage when used in conjunction with a trailer 18. Upon fitment of the trailer 18, the existing sensors 18 on the rear of the vehicle and any permanent installation of a reversing aid will become redundant. However, the present invention allows the transmitter 4 to be relocated to an alternative position 20 on the trailer 18. This can be done to cooperate with an alternative pair of sensors 21 already fitted to the trailer 18 or, if desired, dismounting and relocation of the sensors 19 from the vehicle to the positions on the trailer 18 as shown by 21.

In performing a shift of the transmitter to the trailer 18, there is no need to accommodate any signal connection through the conventional vehicle to trailer electrical socket. Such sockets are provided with limited pins that may not accommodate an extra signal. Furthermore, such feature would generally need to be accommodated in both the trailer and the vehicle upon manufacture rather than allowing for retrofit to both the vehicle and trailer as provided by this preferred embodiment.

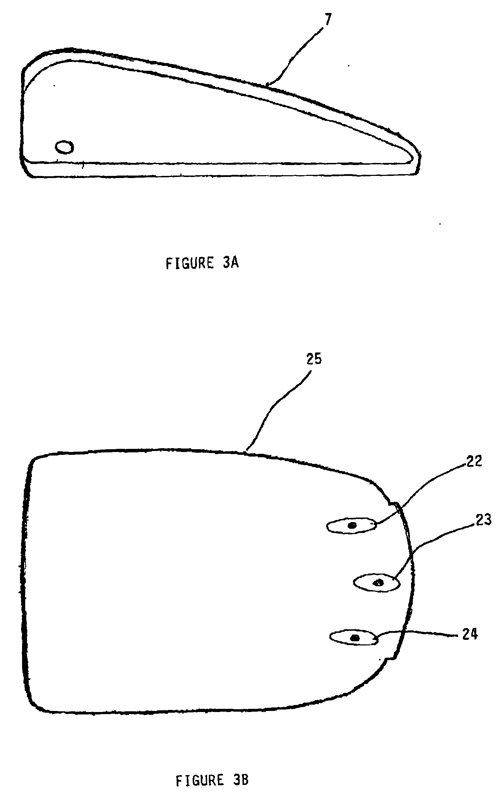

Referring to Figs. 3A and 3B, the receiver 7 is shown in side and plan elevation respectively. This is a preferred embodiment of the receiver 7 and can be fitted adjacent an upper edge of a windscreen of a vehicle or fitted just above the dash of the vehicle if desired.

The indicating means 8 can comprise at least one and preferably more indicating lights 22, 23 and 24. Alternatively or, preferably additionally, an audible alarm 25 may also be incorporated within the receiver 7.

The operation of the sensors, transmitter and receiver can be determined by the particular needs of any specific arrangement. However, in this preferred system, the sensors provide signals through the transmitter 4 to the receiver 7 that vary according to the proximity of an object. This may be a continuously variable signal or a signal merely indicating intermittent steps in proximity. These may similarly be reflected by the indicating means 8 to provide a series of alternative indications of the proximity of an object

Typically, the LED 22 may be activated when an object comes within one meter of the sensor 2. At the same time, the audible signal 25 may activate an intermittent sound. As the vehicle further approaches that object, the sound from the audible alarm 25 may increase in frequency and the additional LEDs 23 and 24 light up at appropriate smaller distances between the sensor 2 and the object. For example, the audible alarm may become substantially continuous and all three LEDs illuminate when the distance between the sensor 2 and the object is, for example, 40 cm.

As explained in relation to this preferred embodiment, the apparatus 1 is relatively easily fitted to a vehicle. The mounting 5 may be suitably fitted within the boot of a vehicle and the wired connection 11 connected to the reversing light wire 12 and earth wire 13 to the chassis. The sensors 2 can be fitted adjacent the rear of the vehicle and fitted by connector 6 directly into the mounting bracket 5. The transmitter 4 may be fitted into the mounting bracket 5 to complete that part of the installation.

The receiver 7 may be fitted by the mounting 10 directly onto the windscreen of the vehicle if desired. Similarly, the power supply 14 allows fitment directly to the cigarette lighter power source. No complicated wiring or difficult cabling is required within the vehicle.

If the system is provided with additional sensors, these may be fitted to a trailer with a further mounting bracket 5 similarly fitted into the trailer. Upon connection of the trailer, the transmitter 4 can simply be removed from the bracket 5 in the boot and slotted into the bracket on the trailer,

Thus it can be seen that the invention provides a reversing aid or object locating aid for easy fitment to a vehicle. It overcomes some of the disadvantages of the permanent placement of existing systems and allows transfer of at least the most expensive components being the transmitter and receiver to an alternative vehicle to avoid duplication of cost in those components. It further allows easy fitment to a trailer or other towed apparatus of the transmitter in conjunction with relocation of the sensors or fitment of a further set of sensors. No reliance is made upon the vehicle to trailer electrical connection for transmission of the signals from the sensors.

## Claims

1. A system for detecting an object while reversing a vehicle and providing an indication to the driver of the proximity of the object comprising sensor means for detecting an object in the path of a reversing vehicle, radio frequency transmitter means for transmitting a signal representative of the distance of the object from the vehicle, and radio frequency receiver means for receiving the signal from the transmitter means and generating a visual and/or audible indication to the driver of the proximity of the object relative to the vehicle.

2. A system according to claim 1 wherein a visual indication is provided by a plurality of lights which are progressively illuminated to indicate a reduction in the distance between the object and the vehicle.

3. A system according to claim 1 or claim 2 wherein an audible indication is provided by intermittent beeps which become progressively faster to indicate a reduction in the distance between the object and the vehicle.

4. A system according to claim 2 in which all the lights are illuminated at a predetermined distance between the object and the vehicle.

5. A system according to claim 3 in which the beep becomes a continuous tone at a predetermined distance between the object and the vehicle,

6. A system according to any preceding claim in which the transmitter is detachable for changing the mounted position.

7. A system according to claim 6 in which the transmitter is mountable on a vehicle or a trailer towed by the vehicle.

8. A system according to any preceding claim in which the receiver is mountable on the front of the vehicle.

9. A system according to any preceding claim arranged to switch on and monitor the distance to objects when reverse gear is selected.

10. A system according to any preceding claim arranged to indicate objects within a l-m. range of the rear of the vehicle.

11. A system according to any preceding claim wherein the transmitter is connected to the light circuit.

12. A system according to any preceding claim wherein the receiver is connectable to a cigarette lighter socket,

13. A system substantially as described herein with reference to the accompanying drawings.

14. A reversing aid for fitment to a vehicle comprising:
- at least one sensor for fitment on or adjacent an exterior of the vehicle to sense the proximity of an object;
- a wireless transmitter in communication with said sensor to receive a signal representative of the proximity from said sensor and transmit a further representative signal;
- a receiver to receive said representative signal from said transmitter; and
- indicating means in communication with said receiver to provide a driver with an indication of the proximity of an object in accordance with the signal received by said receiver.

15. A reversing aid for fitment to a vehicle as claimed in claim 14 wherein at least said wireless transmitter is demountable from a fixing to said vehicle.

16. A reversing aid for fitment to a vehicle as claimed in claim 15 wherein said demountable fixing comprises a mounting bracket attachable to a vehicle to receive said transmitter to accommodate connection between said transmitter and at least one signal carrying communication path from said at least one sensor.
